# EUROPÄISCHE PATENTSCHRIFT

(11) **EP 2 116 638 B1**
(45) Veröffentlichungstag und Bekanntmachung des Hinweises auf die Patenterteilung: **08.04.2015**
(21) Anmeldenummer: 09002161.9
(22) Anmeldetag: 16.02.2009
(51) Int. Cl.: C08J 3/09, C08J 5/18, C08L 1/08

(54) **Verfahren zur Herstellung einer Cellulosecarbamat-Blasfolie**
Method for creating a cellulose carbamate blown film
Procédé de fabrication d'un film soufflé de carbamate de cellulose

(30) Priorität: 14.04.2008 DE 102008018745
(43) Veröffentlichungstag der Anmeldung: 11.11.2009
(73) Patentinhaber: Fraunhofer-Gesellschaft zur Förderung der angewandten Forschung e.V., 80686 München (DE)
(72) Erfinder: Ebeling, Horst, Dr., 14727 Premnitz (DE); Fink, Hans-Peter, Dr., 14513 Teltow (DE)
(74) Vertreter: Pfenning, Meinig & Partner GbR

(56) Entgegenhaltungen:
- EP-A1- 0 402 707
- WO-A-95/07811
- WO-A-95/35340
- WO-A-2007/026886
- DE-A1-102004 007 616
- DE-B3-102004 031 025
- US-A- 2 134 825
- US-A- 4 404 369
- SUSANN BARTHEL AND THOMAS HEINZE: "Acylation and carbanilation of cellulose in ionic liquids" GREEN CHEMISTRY, ROYAL SOCIETY OF CHEMISTRY, CAMBRIDGE, GB, Bd. 8, 1. Januar 2006 (2006-01-01), Seiten 301-306, XP009105137 ISSN: 1463-9262

## Beschreibung

Vorliegende Erfindung betrifft ein Verfahren zur Herstellung einer Cellulosecarbamat-Blasfolie aus einer Cellulosecarbamat-Spinnlösung, wobei das Cellulosecarbamat in mindestens einer ionischen Flüssigkeit gelöst ist. Bei diesem Verfahren wird eine Lösung von Cellulosecarbamat in einer ionischen Flüssigkeit in ein Koagulationsbad extrudiert.

Weltweit werden gegenwärtig erhebliche Mengen an Produkten, wie Fasern, Folien, Vliesstoffe und andere Formkörper aus Regeneratcellulose vorwiegend nach dem Viskoseverfahren hergestellt. Da das Viskoseverfahren mit erheblichen Umweltbelastungen, z.B. durch Schwefelkohlenstoff, Schwefelwasserstoff, Schwermetalle, sowie hohen Investitionskosten verbunden ist, werden bereits seit Jahren Anstrengungen unternommen, das Viskoseverfahren durch alternative Verfahren abzulösen. Entwickelt wurden Verfahren auf Basis des direkten Lösens von Zellstoff in einem geeigneten Lösungsmittel bzw. alternative Derivatisierungsvarianten ohne Schwefelkohlenstoff.

Ein eingeführtes Verfahren (Tencel^{®}) zur Herstellung von Cellulosefasern ist das Verspinnen von Lösungen der Cellulose in Aminoxiden, vorzugsweise in N-Methyl-Morpholin-N-Oxid (NMMO), nicht zuletzt deshalb, weil damit der umständliche Weg über die Derivatisierung der Cellulose vermieden wird. Aus der DE 28 30 685 und der US 3,767,756 sowie der EP 0 490 870 ist bekannt, dass Cellulose in einem NMMO-Wasser-System löslich ist und durch Spinnen in eine meist wässrige NMMO-Lösung zu textilen Fasern verarbeitet werden kann.

Die Herstellung von Cellulosefolien durch Extrusion einer Lösung von Cellulose in NMMO in ein Koagulationsbad sowie die mit diesem Verfahren hergestellten Folien und deren Verwendung sind Gegenstand der in der DE 44 21 482 und der EP 0 662 283 beschriebenen Erfindungen.

Eine weitere bekannte Möglichkeit zur Herstellung von Formkörpern aus Regeneratcellulose besteht im Ausfällen einer Lösung von Cellulosecarbamat (EP 57 105, EP 178 292), das durch Umsetzung von Cellulose mit Harnstoff gebildet wird. Cellulosecarbamat ist in kalter Natronlauge löslich und kann in erwärmter Natronlauge wieder zu Cellulose regeneriert werden.

Nachteilig für die Produktivität der beschriebenen Cellulose-Nassspinnverfahren ist die geringe Feststoffkonzentration der Cellulose in der Spinnlösung, die in der Regel 8 bis 15 % beträgt.

Die Anwendung von Konzentrationen oberhalb 20 % für die Herstellung cellulosischer Fasern auf Basis der Extrusion von Lösungen von Cellulosecarbamat in NMMO wird in der DE 10 2004 007 616 beschrieben. Nachteilig wirken sich bei diesem Verfahren die hohen Spinnlösungsviskositäten aus. Die Spinnlösungsherstellung erfolgt durch Quellen des Cellulosecarbamats in einer 40 bis 70 %-igen Mischung aus NMMO und Wasser und anschließendem Abdestillieren von Wasser, was erhebliche Lösezeiten und einen höheren Energiebedarf erfordert.

Als weiteres Lösungsmittel für Cellulose wurden in jüngerer Zeit die ionischen Flüssigkeiten beschrieben. Ionische Flüssigkeiten sind Salze, die aus einem cyclischen, meist stickstoffhaltigen Kation und einem organischen oder anorganischen Anion aufgebaut sind und einen Schmelzpunkt unter 100 °C besitzen. Möglichkeiten zur Synthese von ionischen Flüssigkeiten, der Einsatz als Medium in chemischen Umsetzungen und auch als Lösungsmittel für Cellulose sowie die Verformung dieser Lösungen zu Fasern sind in nachfolgend genannter Veröffentlichung beschrieben (G. Laus, G. Bentivoglio, H. Schottenberger, V. Kahlenberg, H. Kopacka, T. Röder, H. Sixta "Ionic Liquids: Current Developments, Potential and Drawbacks for Industrial Applications" in Lenzinger Berichte, 84(2005) 71-85).

In der WO 2006/000197 werden Verfahren und Vorrichtung zur Herstellung von Formkörpern aus Lösungen von Cellulose in ionischen Flüssigkeiten beschrieben. Die Zellstoffe werden hier in Wasser aufgeschlagen und in feuchter Form dem Löseprozess zugeführt. Das bedeutet, dass das Wasser während des Lösens entfernt werden muss, wodurch die Lösezeit und der Energiebedarf beeinflusst werden. Die beschriebenen Spinnlösungen mit Konzentrationen bis zu 20 % haben sehr hohe Nullscherviskositäten.

S. Barthel et al. beschreiben in Green Chem., 2006,8,301-306 ein Verfahren zur Acylierung sowie zur Carbannelierung von Cellulose in ionischen Flüssigkeiten.

Aus der DE 10 2004 007616 A1 sind bruchfeste Fasern und andere Formkörper aus Cellulosecarbamat bzw. Cellulose, die durch Regenerierung von Cellulosecarbamat erhalten wird, sowie ihre Herstellung durch Extrusion einer Lösung von Cellulosecarbmat in N-Methylmorpholin-N-Oxid bekannt.

Weiterhin beschreibt DE 10 2004 031025 B3 ein Verfahren zur Herstellung von Formkörpern aus Cellulose mit ionischen Flüssigkeiten als Lösungsmittel, bei dem man die Cellulose löst, die Lösung zu Fasern bzw. Folien/Membranen verformt, die Cellulose durch Fällen in wässrigen Lösungen regeneriert, das Lösungsmittel durch Waschen abtrennt und die Formkörper trocknet.

Die US 4,404,369 betrifft ein Alkali-lösliches Cellulosederivat, das durch Behandlung von Cellulose mit flüssigem Ammoniak und darin gelöstem Harnstoff erhalten wird.

Die WO 2007/026886 A1 betrifft einen Polymerblend, der aus Polyrotaxan und einem weiteren polymeren Material gebildet ist, sowie einen hieraus gebildeten Formkörper.

Aus der WO 95/07811 ist eine Vorrichtung und eine Verfahren zur Herstellung von cellulosischen Folien bekannt, die durch Extrusion einer erhitzen Lösung von Cellulose in einem tertiären Aminoxid erhalten werden.

Die WO 95/35340 betrifft ein Verfahren zur Herstellung orientierter Cellulosefolien durch Verspinnen von in Aminoxiden gelöster Cellulose in einem Fällbad.

Die US 2,134,825 betrifft Cellulosederivate, beispielsweise Cellulosecarbamat sowie hieraus hergestellte Formkörper.

Die EP 0402707 betrifft ein Verfahren zur Herstellung von Celluloseaminomethanat, bei dem Cellulose in eine wässrige, harnstoffenthaltende Lösung eingebracht wird, sowie hieraus hergestellte Formkörper.

Ausgehend hiervon war es Aufgabe der vorliegenden Erfindung, ein umweltfreundliches Verfahren zur Herstellung von qualitativ hochwertigen Cellulosecarbamat-Blasfolien bereitzustellen, das den Ansprüchen hinsichtlich geringer Investitions- und Produktionskosten durch hohe Lösungskonzentrationen genügt.

Diese Aufgabe wird bezüglich des Verfahrens zur Herstellung einer Cellulosecarbamat-Blasfolie mit den Merkmalen des Patentanspruchs 1 gelöst. Dabei stellen die jeweiligen abhängigen Ansprüche vorteilhafte Weiterbildungen dar.

Es wird eine Spinnlösung aus Cellulosecarbamat beschrieben, wobei das Cellulosecarbamat in mindestens einer ionischen Flüssigkeit gelöst ist. Dabei beträgt die Cellulosecarbamatkonzentration der Spinnlösung mindestens 15 Gew.-% und die Nullscherviskosität, gemessen bei 100 °C, liegt dabei in einem Bereich von 50 bis 7500 Pas.

Überraschenderweise zeigte sich, dass Cellulosecarbamat sich bis zu hohen Konzentrationen in ionischen Flüssigkeiten löst und zu Blasfolien mit hohen Festigkeiten verformt werden kann. Ebenfalls überraschend zeigte sich, dass die hochkonzentrierten Lösungen verglichen zu Cellulose in ionischen Flüssigkeiten und auch zu Cellulosecarbamat in NMMO weitaus geringere Nullscherviskositäten bei der Verarbeitungstemperatur besitzen.

Zur Herstellung der Spinnlösung wird Cellulosecarbamat unter Rühren oder Kneten bei Temperaturen oberhalb 80 °C in einer ionischen Flüssigkeit gelöst und die resultierende Spinnlösung filtriert.

Vorzugsweise wird getrocknetes Cellulosecarbamat zur Spinnlösungsherstellung eingesetzt und die Spinnlösung durch mechanische Vermischung bei Temperaturen zwischen 80 und 120 °C, bevorzugt zwischen 90 und 100 °C gebildet. Bei Verwendung von wasserhaltigem Cellulosecarbamat erfolgt das Lösen durch Kneten bei gleichzeitigem Entzug des Wassers unter reduziertem Druck, z.B. kleiner 0,9 bar.

In einer vorteilhaften Ausführungsform liegt der Schmelzpunkt der mindestens einen ionischen Flüssigkeit unter 100 °C, bevorzugt unter 75 °C, besonders bevorzugt unter 50 °C.

Die mindestens eine ionische Flüssigkeit ist dabei bevorzugt ausgewählt aus der Gruppe bestehend aus Ammonium-, Pyrazolium-, Cholinium-, in 1- und 3-Stellung alkyl- oder arylsubstituierten Imidazoliumverbindungen und/oder Mischungen hieraus, insbesondere Butyl-methyl-imidazoliumacetat, Butyl-methyl-imidazoliumchlorid, Ethyl-methyl-imidazoliumchlorid, Ethyl-methyl-imidazoliumacetat, Butyl-ethyl-imidazoliumacetat, Butyl-ethyl-imidazoliumchlorid, Methyl-tetradecyl-imidazoliumchlorid, Butyl-methyl-imidazoliumbromid, Butyl-methyl-pyridiniumchlorid, Butyl-methyl-imidazoliumthiocyanat, Ethyl-methyl-imidiazoliumthiocyanat, Butyl-ethyl-imidazoliumthiocyanat, Hexyl-dimethyl-imidazoliumhexafluoroborat, Ethoxymethyl-methyl-pyrrolidiniumchlorid, Hydroxypropyl-methyl-imidazoliumacetat, Hydroxypropyl-methyl-imidazoliumchlorid und/oder Butyl-methyl-pyridiniumchlorid.

Weitere Vorteile ergeben sich, wenn das Cellulosecarbamat einen DP_{cuoxam} von 150 bis 750, bevorzugt von 250 bis 550 aufweist.

Ebenso ist es bevorzugt, wenn das Cellulosecarbamat einen Substitutionsgrad DS_{Carbamat} von 0,1 bis 1, bevorzugt von 0,2 bis 0,6 aufweist.

Als besonderer Vorteil ist hervorzuheben, dass sich durch Lösen des Cellulosecarbamats in einer ionischen Flüssigkeit hohe Konzentrationen des Cellulosecarbamats in Lösung einstellen lassen. So kann die Cellulosecarbamat-Konzentration hohe Konzentrationswerte, vorteilhaft zwischen 20 und 50 Gew.-%, weiter bevorzugt zwischen 20 und 40 Gew.-%, besonders bevorzugt zwischen 20 und 30 Gew.-% einnehmen.

Weitere Vorteile der Spinnlösung sind darin zu sehen, dass sich trotz des hohen Cellulosecarbamat-Gehaltes geringe Nullscherviskositäten ergeben. Bevorzugte Bereiche der Nullscherviskosität, gemessen bei 100 °C, liegen dabei im Bereich von 50 bis 5000 Pas, bevorzugt von 150 bis 2500 Pas und besonders bevorzugt von 250 bis 1250 Pas.

Erfindungsgemäß wird ein Verfahren zur Herstellung einer Cellulosecarbamat-Blasfolie mit den Merkmalen des Patentanspruchs 1 bereitgestellt, wobei die Spinnlösung über eine Filmblasdüse sowie daran anschließend einen äußeren Luftspalt in ein Koagulationsbad extrudiert wird.

Vorzugsweise wird die Spinnlösung vor Extrusion filtriert und durch den äußeren Luftspalt vertikal in das Koagulationsbad gepresst. Durch Variation der Abzugsgeschwindigkeit sowie des Aufblasverhältnisses werden die Reckverhältnisse in Längs- und Querrichtung eingestellt.

In einer weiteren vorteilhaften Ausführungsform wird als Koagulationsbad eine wässrige Lösung mindestens einer ionischen Flüssigkeit eingesetzt. Vorzugsweise beträgt hier die Gewichtskonzentration der mindestens einen ionischen Flüssigkeit in der wässrigen Lösung von 0,5 bis 50 Gew.-%, bevorzugt von 2 bis 25 Gew.-%.

Die Temperatur der Spinnlösung bei Extrusion beträgt vorzugsweise von 50 bis 150 °C, weiter bevorzugt von 80 bis 120 °C.

Weiterhin werden die mit diesem Verfahren hergestellten Folien beschrieben, die sich insbesondere dadurch auszeichnen, dass sie hohe Festigkeiten in Längs- und Querrichtung aufweisen.

Die nach diesem Verfahren hergestellten Folien besitzen in Abhängigkeit von den angewandten Koagulationsbedingungen einen Stickstoffgehalt von 0,1 bis 7 %, vorzugsweise von 0,5 bis 5 %.

Ebenso zeichnen sich die erfindungsgemäßen Blasfolien durch eine vorteilhafte Festigkeit sowie durch eine vorteilhafte Reißdehnung aus. Insbesondere beträgt hierbei die Festigkeit (längs) 250 bis 750 MPa und/oder (quer) 75 bis 350 MPa, wobei also tendenziell die Festigkeit (quer) geringer ist als die Festigkeit (längs).

Zudem beträgt die vorteilhafte Reißdehnung (längs) 8 bis 30 % und/oder (quer) 15 bis 50 %, wobei hier tendenziell die Reißdehnung (quer) größer ist als die Reißdehnung (längs).

Weiterhin zeichnet sich die Blasfolie durch einen vorteilhaften E-Modul (längs) zwischen 5000 und 20000 MPa und/oder einen E-Modul (quer) zwischen 1000 und 6000 MPa aus.

Die zuvor beschriebene Blasfolie kann beispielsweise als biologisch abbaubares und/oder kompostierbares Verpackungsmaterial, als Wursthülle und/oder als Membran zur Stofftrennung, z.B. bei der Wasserreinigung verwendet werden.

Anhand der nachfolgenden Beispiele soll der erfindungsgemäße Gegenstand näher erläutert werden, ohne diesen auf die hier gezeigten speziellen Ausführungsformen beschränken zu wollen.

### Beispiele

### Beispiel 1

200 g Cellulosecarbamat (DPcuox: 258, DS 0,4) werden mit 800 g Butyl-methyl-imidazoliumacetat gemischt und in einem Horizontalkneter bei 110 °C in 1 Std. gelöst. Die resultierende homogene, dunkelbraune Lösung ist völlig faserfrei. Die Viskosität der Lösung, gemessen bei 100 °C beträgt 64 Pas.

Die Lösung wird mit einer geregelten Zahnradpumpe durch eine Filmblasdüse mit einem Durchmesser von 25 mm bei einer Temperatur von 100 °C nach unten durch einen äußeren Luftspalt von 3 mm Breite mit einem Verzug von 1:5 und einem Querreckverhältnis von 1:1 in ein Koagulationsbad der Zusammensetzung 12 % Butyl-methyl-imidazoliumacetat/88 % deoinisiertes Wasser extrudiert. Der geformte Schlauch wird über eine Umlenkrolle aus dem Koagulationsbad herausgeführt, das Lösungsmittel völlig ausgewaschen und getrocknet.

Die entstandene Folie besitzt folgende Parameter:

| | |
|---|---|
| Dicke: | 95 µm |
| Festigkeit, längs: | 325 Mpa |
| Festigkeit, quer: | 156 Mpa |
| Reißdehnung, längs: | 12 % |
| Reißdehnung, quer: | 29 % |
| E-Modul, längs: | 11200 Mpa |
| E-Modul, quer | 2400 Mpa |

### Beispiel 2:

300 g Cellulosecarbamat (DPcuox: 258, DS 0,4) werden mit 700 g Butyl-methyl-imidazoliumacetat gemischt und in einem Horizontalkneter bei 110 °C in 2 Std. gelöst. Die resultierende homogene, dunkelbraune Lösung ist völlig faserfrei. Die Viskosität der Lösung, gemessen bei 100 °C beträgt 1210 Pas.

Die Lösung wird mit einer geregelten Zahnradpumpe durch eine Filmblasdüse mit einem Durchmesser von 25 mm bei einer Temperatur von 100 °C nach unten durch einen äußeren Luftspalt von 3 mm Breite mit einem Verzug von 1:8 und einem Querreckverhältnis von 1:1 in ein Koagulationsbad der Zusammensetzung 12 % Butyl-methyl-imidazoliumacetat/88 % deoinisiertes Wasser extrudiert. Der geformte Schlauch wird über eine Umlenkrolle aus dem Koagulationsbad herausgeführt, das Lösungsmittel völlig ausgewaschen und der Schlauch getrocknet.

Die entstandene Folie besitzt folgende Parameter:

| | |
|---|---|
| Dicke: | 90 µm |
| Festigkeit, längs: | 557 Mpa |
| Festigkeit, quer: | 236 Mpa |
| Reißdehnung, längs: | 10 % |
| Reißdehnung, quer: | 22 % |
| E-Modul, längs: | 14200 Mpa |
| E-Modul, quer | 3600 MPa |

## Patentansprüche

1. Verfahren zur Herstellung einer Cellulosecarbamat-Blasfolie, wobei eine Cellulosecarbamat-Spinnlösung, enthaltend eine Lösung von Cellulosecarbamat in mindestens einer ionischen Flüssigkeit, mit einer Cellulosecarbamatkonzentration der Spinnlösung von mindestens 15 Gew.-% und einer Nullscherviskosität, gemessen bei 100 °C, im Bereich von 50 bis 7500 Pas, über eine Filmblasdüse sowie daran anschließend einen äußeren Luftspalt in ein Koagulationsbad extrudiert wird, wobei die ionische Flüssigkeit ausgewählt ist aus der Gruppe bestehend aus Ammonium-, Pyrazolium-, Cholinium-, in 1- und 3-Stellung alkyl- oder arylsubstituierte Imidazoliumverbindungen und/oder Mischungen hieraus.

2. Verfahren nach Anspruch 1, **dadurch gekennzeichnet, dass** die ionische Flüssigkeit ausgewählt ist aus der Gruppe bestehend aus Butyl-methyl-imidazoliumacetat, Butyl-methyl-imidazoliumchlorid, Ethyl-methyl-imidazoliumchlorid, Ethyl-methyl-imidazoliumacetat, Butyl-ethyl-imidazoliumacetat, Butyl-ethyl-imidazoliumchlorid, Methyl-tetradecyl-imidazoliumchlorid, Butyl-methyl-imidazoliumbromid, Butyl-methyl-imidazoliumthiocyanat, Ethyl-methyl-imidiazoliumthiocyanat, Butyl-ethyl-imidazoliumthiocyanat, Hydroxypropyl-methyl-imidazoliumacetat, Hydroxypropyl-methyl-imidazoliumchlorid und/oder Butyl-methyl-pyridiniumchlorid, Butyl-methyl-pyridiniumchlorid und/oder Ethoxymethyl-methyl-pyrrolidiniumchlorid.

3. Verfahren nach einem der vorhergehenden Ansprüche, **dadurch gekennzeichnet, dass** als Koagulationsbad eine wässrige Lösung mindestens einer ionischen Flüssigkeit eingesetzt wird.

4. Verfahren nach vorhergehendem Anspruch, **dadurch gekennzeichnet, dass** die Gewichtskonzentration der mindestens einen ionischen Flüssigkeit in der wässrigen Lösung von 0,5 bis 50 Gew.-%, bevorzugt von 2 bis 25 Gew.-% beträgt.

5. Verfahren nach einem der Ansprüche 1 bis 4, dadurch **gekennzeichnet, dass** die Temperatur der Spinnlösung von 50 bis 150 °C, bevorzugt von 80 bis 120 °C beträgt.

## Claims

1. Method for the production of a cellulose carbamate blown film, wherein a cellulose carbamate spinning solution, comprising a solution of cellulose carbamate in at least one ionic liquid, with a cellulose carbamate concentration of the spinning solution of at least 15% by weight and a zero shear viscosity, measured at 100 °C, in the range of 50 to 7500 Pas, is extruded into a coagulation bath via a film-blowing nozzle and also, subsequent thereto, an outer air gap, wherein the ionic liquid is selected from the group consisting of ammonium-, pyrazolium-, cholinium, in 1- and 3- position alkyl- or aryl-substituted imidazolium compounds and/or mixtures thereof.

2. Method according to claim 1, **characterized in that** the ionic liquid is selected from the group consisting of butyl methylimidazolium acetate, butyl methylimidazolium chloride, ethyl methylimidazolium chloride, ethyl methylimidazolium acetate, butyl ethylimidazolium acetate, butyl ethylimidazolium chloride, methyl tetradecylimidazolium chloride, butyl methylimidazolium bromide, butyl methylimidazolium thiocyanate, ethyl methylimidazolium thiocyanate, butyl ethylimidazolium thiocyanate, hydroxypropyl methylimidazolium acetate, hydroxypropyl methylimidazolium chloride and/or butyl methylpyridinium chloride, butyl methylpyridinium chloride and/or ethoxy methyl methylpyrrolidinium chloride.

3. Method according to one of the preceding claims, **characterized in that** an aqueous solution of at least one ionic liquid is used as coagulation bath.

4. Method according to the preceding claim, **characterized in that** the weight concentration of the at least one ionic liquid in the aqueous solution is from 0.5 to 50% by weight, preferably from 2 to 25% by weight.

5. Method according to one of the claims 1 to 4, **characterized in that** the temperature of the spinning solution is from 50 to 150°C, preferably from 80 to 120°C.

## Revendications

1. Procédé de fabrication d'une feuille soufflée en carbamate de cellulose, dans lequel une solution de filage à base de carbamate de cellulose, contenant une solution de carbamate de cellulose dans au moins un liquide ionique, présentant une concentration du carbamate de cellulose dans la solution de filage d'au moins 15 % en poids et une viscosité à cisaillement nul, mesurée à 100°C, comprise dans la plage de 50 à 7500 Pa.s, est extrudée dans un bain de coagulation, en passant par une buse de soufflage de film, puis par une fente d'air extérieure, le liquide ionique étant choisi dans le groupe consistant en les composés de l'ammonium, du pyrazolium, du cholinium, de l'imidazolium substitués en position 1 et 3 par des substituants alkyle ou aryle, et/ou les mélanges de ceux-ci.

2. Procédé selon la revendication 1, **caractérisé en ce que** le liquide ionique est choisi dans le groupe consistant en l'acétate de butyl-méthyl-imidazolium, le chlorure de butyl-méthyl-imidazolium, le chlorure d'éthyl-méthyl-imidazolium, l'acétate d'éthyl-méthyl-imidazolium, l'acétate de butyl-éthyl-imidazolium, le chlorure de butyl-éthyl-imidazolium, le chlorure de méthyl-tétradécyl-imidazolium, le bromure de butyl-méthyl-imidazolium, le thiocyanate de butyl-méthyl-imidazolium, le thiocyanate d'éthyl-méthyl-imidazolium, le thiocyanate de butyl-éthyl-imidazolium, l'acétate d'hydroxypropyl-méthyl-imidazolium, le chlorure d'hydroxy-propyl-méthyl-imidazolium et/ou le chlorure de butyl-méthyl-pyridinium, le chlorure de butyl-méthyl-pyridinium et/ou le chlorure d'éthoxyméthyl-méthyl-pyrrolidinium.

3. Procédé selon l'une des revendications précédentes, **caractérisé en ce qu'**on utilise en tant que bain de coagulation une solution aqueuse d'au moins un liquide ionique.

4. Procédé selon la revendication précédente, **caractérisé en ce que** la concentration en poids du ou des liquides ioniques dans la solution aqueuse est de 0,5 à 50 % en poids, de préférence de 2 à 25 % en poids.

5. Procédé selon l'une des revendications 1 à 4, **caractérisé en ce que** la température de la solution de filage est de 50 à 150°C, de préférence de 80 à 120°C.
